# EUROPÄISCHE PATENTSCHRIFT

(11) **EP 2 158 270 B1**
(45) Veröffentlichungstag und Bekanntmachung des Hinweises auf die Patenterteilung: **22.08.2018**
(21) Anmeldenummer: 08773519.7
(22) Anmeldetag: 19.06.2008
(51) Int. Cl.: C08L 95/00

(54) **BITUMENMISCHUNG UND VERWENDUNG DERSELBEN**
BITUMEN MIXTURE, AND USE THEREOF
MÉLANGE BITUMINEUX ET UTILISATION CORRESPONDANTE

(30) Priorität: 21.06.2007 DE 102007029045
(43) Veröffentlichungstag der Anmeldung: 03.03.2010
(73) Patentinhaber: Haupt, Bertram, New Port Richey FL 34652 (US); Marzouki, Taieb, 27321 Thedinghausen (DE)
(72) Erfinder: MARZOUKI, Taieb, 27321 Thedinghausen (DE)
(74) Vertreter: Möller, Friedrich
(86) Internationale Anmeldenummer: PCT/EP2008/004934
(87) Internationale Veröffentlichungsnummer: WO 2008/155118

(56) Entgegenhaltungen:
- DE-A1- 10 028 107
- DE-A1- 10 126 249
- DE-A1- 19 952 846
- DE-U1-202004 015 936

## Beschreibung

Die Erfindung betrifft eine Bitumenmischung für hochwertige Bauwerksabdichtungen gemäß dem Oberbegriff des Anspruchs 1.

Bitumenmischungen aufweisende Bauwerksabdichtungen werden als Dachbahnen, Brückenabdichtungen, Kellerabdichtungen und dergleichen eingesetzt. Dachbahnen werden insbesondere im Flachdachbereich als Dachabdichtungen eingesetzt. Solche Dachabdichtungen werden in der Regel mehrschichtig ausgeführt, indem auf mindestens eine Unterlagsdachbahn eine Oberlagsdachbahn angeordnet wird. An die der Witterung und vor allem hohen mechanischen und thermischen Beanspruchungen ausgesetzte Oberlagsdachbahn werden besonders hohe Anforderungen gestellt. Um diese zu erfüllen, werden Oberlagsdachbahnen so wie andere hoch beanspruchte Bauwerksabdichtungen aus hochwertigen Bitumenmischungen hergestellt. Solche hochwertigen Bitumenmischungen basieren auf Polymerbitumen. Dieses ist erheblich teurer als Oxydbitumen, das zum Beispiel zur Herstellung von solchen Dachbahnen verwendet wird, an die geringere Anforderungen gestellt werden, beispielsweise Unterlagsdachbahnen.

Basisstoff zur Herstellung von sowohl Oxydbitumen als auch Polymerbitumen ist Destillationsbitumen. Bei Polymerbitumen wird Destillationsbitumen mit geeigneten Polymerwirkstoffen, wie SBS-Kautschuk oder APP (ataktisches Polypropylen) modifiziert, während bei Oxydbitumen das Destillationsbitumen bei hohen Temperaturen von ca. 280°C unter Zufuhr von Sauerstoff fortschreitend oxydiert wird.

Ein bituminöses Bindemittel für Heißeinbaudecken zur Herstellung von Straßenfahrbahndecken ist aus der DE 101 26 249 A1 bekannt. Das Bindemittel enthält Reinbitumen, Synthesepolymere und gelöschten Kalk. Solche bituminösen Bindemittel sind zur Herstellung von vor allem hochwertigen Dachbahnen nicht geeignet.

Aus der DE 199 52 846 A1 und der DE 100 28 107 A1 sind Bitumenmischungen mit Destillationsbitumen, SBS-Kautschuk, einer Mischung hochsiedender gesättigter Kohlenwasserstoffe und Paraffine bekannt. Der Anteil an SBS-Kautschuk beträgt nur bis zu 3 Gew.-%. Diese Bitumenmischung ist daher nicht für hochwertige Dachbahnen geeignet.

Destillationsbitumen ist an sich sehr weich und kann deshalb als Bitumenmasse für hochwertige Bauwerksabdichtungen, insbesondere Oberlagsdachbahnen, allein nicht verwendet werden. Um die an hochwertige Bauwerksabdichtungen gestellten Anforderungen zu erfüllen, muss der Gehalt an SBS-Kautschuk mindestens 10 Gew.-% betragen. Wegen des hohen Preises von SBS-Kautschuk wird hierdurch die Bitumenmischung stark verteuert.

Bitumenmischungen werden zur Verringerung des Preises mit Füllstoffen versetzt. Die häufigsten Füllstoffe sind Schiefermehl oder Kalksteinmehl. Aufgrund der hohen Viskosität ist es in der Regel nicht möglich, Bitumenmischungen herzustellen, die einen Füllstoffgehalt von mehr als 30 Gew.-% aufweisen. Das gilt vor allem für hochwertige Bauwerksabdichtungen.

Ausgehend vom Vorstehenden liegt der Erfindung die Aufgabe zugrunde, eine Bitumenmischung für hochwertige Bauwerksabdichtungen zu schaffen, die auf Destillationsbitumen basiert und mit möglichst geringen Zusätzen an SBS-Kautschuk trotz großem Füllstoffgehalt die Anforderungen erfüllt, die an hochwertige Bauwerksabdichtungen gestellt werden.

Eine zur Lösung dieser Aufgabe dienende Bitumenmischung weist die Merkmale des Anspruchs 1 auf. Demnach wurde überraschend gefunden, dass ein Gehalt von SBS-Kautschuk von mehr als 3 Gew.-% bis zu 8 Gew.-% ausreicht, wenn neben 30 Gew.-% bis 60 Gew.-% Destillationsbitumen oder 30 Gew.-% bis 70 Gew.-% mindestens eines Füllstoffs die Bitumenmischung außerdem bis zu 6 Gew.-% einer Mischung hochsiedener gesättigter Kohlenwasserstoffe, sogenanntes Fluxöl, und bis 3 Gew.-% feste Paraffine mit einer Kettenlänge im Bereich von C₅₀ bis C₇₀ und einem Erstarrungspunkt von über etwa 95°C und als Rest Destillationsbitumen oder als Rest mindestens einen Füllstoff aufweist. Das Fluxöl und das besondere Paraffin erlauben einen verhältnismäßig geringen Anteil an SBS-Kautschuk. Gleichwohl lässt sich aus einer solchen preiswerten Bitumenmischung eine hohen Anforderungen gerecht werdende Bauwerksabdichtung herstellen.

Es ist zwar schon bekannt, Bitumenmischungen für Dachbahnen mit einem noch geringeren Anteil an SBS-Kautschuk herzustellen; diese eigenen sich aber nicht für hochwertige Bauwerksabdichtungen, vielmehr nur für solche, woran insbesondere hinsichtlich der mechanischen und thermischen Eigenschaften lediglich geringere Anforderungen gestellt werden. Überraschenderweise führt die erfindungsgemäß geringe Erhöhung des Anteils des SBS-Kautschuks gegenüber bekannten Bitumenmischungen für einfache Dachbahnen, wie Unterlagsdachbahnen, dazu, vergleichsweise hohe Anforderungen zu erfüllen. Vor allem führt die erfindungsgemäß Bitumenmischung zu einer besseren Rheologie und eine geringere Viskosität mit der Folge, dass bei der Herstellung der Dachbahn der am meisten als Einlage eingesetzte Polyestervlies schonend verarbeitet werden kann und bei der Verlegung eine gute und schnelle Schweißbarkeit gegeben ist.

Eine alternative bevorzugte Bitumenmischung weist über 3 Gew.-%, aber nicht mehr als 8 Gew.-% SBS-Kautschuk, vorzugsweise 3,5 Gew.-% bis 7,5 Gew.-% SBS-Kautschuk, bis zu 6 Gew.-% Fluxöl, bis zu 3 Gew.-% feste Paraffine mit einer Kettenlänge im Bereich von C₅₀ bis C₇₀ und einem Erstarrungspunkt von über etwa 95°C, 30 Gew.-% bis 60 Gew.-% Destillationsbitumen und als Rest mindestens einen Füllstoff auf.

Eine besonders hohe Anforderungen erfüllende, bevorzugte Bitumenmischung verfügt über einen Gehalt an Paraffinen mit einer Kettenlänge von C₅₀ bis C₇₀ und einem Erstarrungspunkt von über 95°C, vorzugsweise 95°C bis 105°C, insbesondere über 100°C bis zu 105°C, von bis zu 2 Gew.-%.

Gemäß einer Weiterbildung der Erfindung ist vorgesehen, dass der Gehalt an einer Mischung hochsiedener, gesättigter Kohlenwasserstoffe, vorzugsweise sogenanntes Fluxöl, zwischen 1 Gew.-% und 4 Gew.-% liegt.

Die Erfindung bezieht sich des Weiteren auf eine Verwendung einer Bitumenmischung nach dem Anspruch 1 und/oder mindestens einer der vorstehend genannten Weiterbildungen der Erfindung gemäß den abhängigen Ansprüchen 2 bis 5. Demnach ist vorgesehen,
eine solche Bitumenmischung zur Herstellung von Oberlagsdachbahnen zu verwenden. Überraschend hat sich gezeigt, dass die erfindungsgemäßen Bitumenmischungen nicht nur preiswert herstellbar sind und gleichwohl die höhen Anforderungen, die an Oberlagsdachbahnen gestellt werden, erfüllen.

Besonders eignen sich die erfindungsgemäßen Bitumenmischungen für Oberlagsdachbahnen mit einer einzigen oder auch mehreren Verstärkungseinlagen. Dabei führen die erfindungsgemäßen Bitumenmischungen auch zum hervorragenden Durchtränken der oder jeder beliebigen Verstärkungseinlage. Auch Delaminierungserscheinungen solcher mindestens eine Verstärkungseinlage aufweisenden Oberlagsdachbahnen werden bei hohen und niedrigen Temperaturen sicher vermieden. Schließlich ist auch eine gute Rollbarkeit solcher Oberlagsdachbahnen selbst bei niedrigen Temperaturen gewährleistet.

Nachfolgend werden mehrere Beispiele bevorzugter Zusammensetzungen der erfindungsgemäßen Bitumenmischung beschrieben. Die Beispiele beziehen sich auf Bitumenmischungen für insbesondere Oberlagsdachbahnen, die eine oder auch mehrere gegebenenfalls beabstandete Verstärkungsbahnen aufweisen können. Die erfindungsgemäßen Bitumenmischungen eignen sich aber auch für andere hochwertige, insbesondere hoch beanspruchbare, Bauwerksabdichtungen, und zwar vor allem Bauwerksabdichtungsbahnen.

### Beispiel 1:

| | |
|---|---|
| SBS-Katuschuk | größer 3 Gew.-% bis kleiner oder gleich 8 Gew.-% |
| Mischung hochsiedender gesättigter Kohlenwasserstoffe, insbesondere sogenanntes Fluxöl | bis 6 Gew.-% |
| Paraffine | bis 3 Gew.-% |
| ein oder mehrere Füllstoffe | 30 Gew.-% bis 70 Gew.-% |
| Destillationsbitumen | restliche Gew.-% |

### Beispiel 2:

| | |
|---|---|
| SBS-Katuschuk | größer 3 Gew.-% bis kleiner oder gleich 8 Gew.-% |
| Mischung hochsiedender gesättigter Kohlenwasserstoffe, insbesondere sogenanntes Fluxöl | 1 Gew.-% bis 4 Gew.-% |
| Paraffine | bis 2 Gew.-% |
| ein oder mehrere Füllstoffe | 30 Gew.-% bis 50 Gew.-% |
| Destillationsbitumen | restliche Gew.-% |

### Beispiel 3:

| | |
|---|---|
| Destillationsbitumen | 30 Gew.-% bis 60 Gew.-% |
| SBS-Kautschuk | größer 3 Gew.-% bis kleiner oder gleich 8 Gew.-% |
| Mischung hochsiedender gesättigter Kohlenwasserstoffe, insbesondere sogenanntes Fluxöl | bis 6 Gew.-% |
| Paraffine | bis 3 Gew.-% |
| ein oder mehrere Füllstoffe | restliche Gew.-% |

### Beispiel 4:

| | |
|---|---|
| Destillationsbitumen | 30 Gew.-% bis 60 Gew.-% |
| SBS-Kautschuk | größer 3 Gew.-% bis kleiner oder gleich 8 Gew.-% |
| Mischung hochsiedender gesättigter Kohlenwasserstoffe, insbesondere sogenanntes Fluxöl | 1 Gew.-% bis 4 Gew.-% |
| Paraffine | bis 2 Gew.-% |
| ein oder mehrere Füllstoffe | restliche Gew.-% |

Vier weitere Beispiele bevorzugter Zusammensetzungen der erfindungsgemäßen Bitumenmischung weisen einen Anteil von SBS-Kautschuk im Bereich von 3,5 Gew.-% bis 7,5 Gew.-% auf. Alle übrigen Bestandteile, einschließlich ihrer angegebenen Mengenbereiche sind gleich mit den Beispielen 1 bis 4.

Sofern in den vorstehend geschilderten bevorzugten Beispielen nur Paraffine genannt sind, handelt es sich dabei in allen Fällen um Paraffine mit einer Kettenlänge im Bereich von C₅₀ bis C₇₀ und einem Erstarrungspunkt von über etwa 95°C, vorzugsweise zwischen 95°C und 105°C, insbesondere über 100°C bis 105°C.

Die Angabe "restliche Gew.-%" in den vier vorstehenden Beispielen bedeutet, dass entweder Destillationsbitumen (Beispiele 1 und 2) oder Füllstoffe (Beispiele 3 und 4) in einer solchen Menge in der Bitumenmischung enthalten sind, dass die Summe aller Komponenten 100 Gew.-% ergibt. Wenn beispielsweise Destillationsbitumen, SBS-Kautschuk, Fluxöl und Paraffine zusammen einen Anteil von 60 Gew.-% aufweisen, beträgt der Anteil von mindestens einem Füllstoff 40 Gew.-%. Alternativ beträgt der Anteil von Destillationsbitumen 40 Gew.-%, wenn die Summe der Gewichtsanteile vom SBS-Kautschuk, Fluxöl, Paraffine und mindestens einem Füllstoff 60 Gew.-% beträgt.

## Patentansprüche

1. Bitumenmischung für eine Oberlagsdachbahn mit mindestens Destillationsbitumen, SBS-Kautschuk und wenigstens einem Füllstoff, **gekennzeichnet durch** einen Gehalt von größer 3 Gew.-% bis kleiner oder gleich 8 Gew.-% SBS-Kautschuk, einen Gehalt von bis zu 6 Gew.-% einer Mischung hochsiedender gesättigter Kohlenwasserstoffe, sogenanntes Fluxöl, einen Gehalt von bis zu 3 Gew.-% fester Paraffine mit einer Kettenlänge im Bereich von C₅₀ bis C₇₀ und einem Erstarrungspunkt von über etwa 95°C, 30 Gew.-% bis 70 Gew.-% mindestens eines Füllstoffs und einem restlichen Anteil von Destillationsbitumen oder 30 Gew.-% bis 60 Gew.-% Destillationsbitumen und einem restlichen Anteil von mindestens einem Füllstoff.

2. Bitumenmischung nach Anspruch 1, **gekennzeichnet durch** einen Gehalt an Füllstoffen oder nur einem Füllstoff von 30 Gew.-% bis 50 Gew.-%.

3. Bitumenmischung nach Anspruch 1 oder 2, **gekennzeichnet durch** einen Gehalt an Paraffinen mit einer Kettenlänge im Bereich von C₅₀ bis C₇₀ und einem Erstarrungspunkt über etwa 95°C, insbesondere 95°C bis 105°C, vorzugsweise größer 100°C bis 105°C, von bis zu 2 Gew.-%.

4. Bitumenmischung nach Anspruch 1, **gekennzeichnet durch** einen Gehalt an SBS-Kautschuk von 3,5 Gew.-% bis 7,5 Gew.-%.

5. Bitumenmischung nach einem der vorhergehenden Ansprüche, **gekennzeichnet durch** einen Gehalt an einer Mischung hochsiedender gesättigter Kohlenwasserstoffe, insbesondere sogenanntes Fluxöl, von 1 Gew.-% bis 4 Gew.-%.

6. Verwendung einer Bitumenmischung nach einem oder mehreren der Ansprüche 1 bis 5 zur Herstellung einer Oberlagsdachbahn.

7. Verwendung einer Bitumenmischung nach einem oder mehreren der Ansprüche 1 bis 5 zur Herstellung einer mindestens eine Verstärkungseinlage aufweisenden Oberlagsdachbahn.

## Claims

1. Bitumen mixture for an overlayment roofing membrane comprising at least distillation bitumen, SBS rubber and at least one filler, **characterized by** an SBS rubber content of greater than 3% by weight to less than or equal to 8% by weight, a content of up to 6% by weight of a mixture of high-boiling saturated hydrocarbons, so-called flux oil, a content of up to 3% by weight of solid paraffins having a chain length ranging from C₅₀ to C₇₀ and a solidification point of above about 95°C, 30% by weight to 70% by weight of at least one filler and a remainder of distillation bitumen or 30% by weight to 60% by weight of distillation bitumen and a remainder of at least one filler.

2. Bitumen mixture according to Claim 1, **characterized by** a content of fillers or just one filler of 30% by weight to 50% by weight.

3. Bitumen mixture according to Claim 1 or 2, **characterized by** a content of paraffins having a chain length ranging from C₅₀ to C₇₀ and a solidification point of above about 95°C, in particular 95°C to 105°C, preferably greater than 100°C to 105°C, of up to 2% by weight.

4. Bitumen mixture according to Claim 1, **characterized by** an SBS rubber content of 3.5% by weight to 7.5% by weight.

5. Bitumen mixture according to any one of the preceding claims, **characterized by** a content of a mixture of high-boiling saturated hydrocarbons, in particular so-called flux oil, of 1 % by weight to 4% by weight.

6. Use of a bitumen mixture according to one or more of Claims 1 to 5 for producing an overlayment roofing membrane.

7. Use of a bitumen mixture according to one or more of Claims 1 to 5 for producing an overlayment roofing membrane comprising at least one reinforcing ply.

## Revendications

1. Mélange bitumineux pour feuille de toit contenant au moins un bitume de distillation, un caoutchouc SBS et au moins une charge, **caractérisé par** une teneur de plus de 3 % en poids à 8 % en poids ou moins en caoutchouc SBS, une teneur de jusqu'à 6 % en poids en un mélange d'hydrocarbures saturés de point d'ébullition élevé, dit huile de fluxage, une teneur de jusqu'à 3 % en poids en paraffines solides ayant une longueur de chaîne dans la plage allant de C₅₀ à C₇₀ et un point de solidification supérieur à environ 95 °C, 30 % en poids à 70 % en poids d'au moins une charge et une proportion résiduelle de bitume de distillation, ou 30 % en poids à 60 % en poids de bitume de distillation et une proportion résiduelle d'au moins une charge.

2. Mélange bitumineux selon la revendication 1, **caractérisé par** une teneur en charges ou uniquement en une charge de 30 % en poids à 50 % en poids.

3. Mélange bitumineux selon la revendication 1 ou 2, **caractérisé par** une teneur en paraffines ayant une longueur de chaîne dans la plage allant de C₅₀ à C₇₀ et un point de solidification supérieur à environ 95 °C, notamment de 95 °C à 105 °C, de préférence de plus de 100 °C à 105 °C, de jusqu'à 2 % en poids.

4. Mélange bitumineux selon la revendication 1, **caractérisé par** une teneur en caoutchouc SBS de 3,5 % en poids à 7,5 % en poids.

5. Mélange bitumineux selon l'une quelconque des revendications précédentes, **caractérisé par** une teneur en un mélange d'hydrocarbures saturés de point d'ébullition élevé, notamment ladite huile de fluxage, de 1 % en poids à 4 % en poids.

6. Utilisation d'un mélange de bitume selon une ou plusieurs des revendications 1 à 5 pour la fabrication d'une feuille de toit.

7. Utilisation d'un mélange de bitume selon une ou plusieurs des revendications 1 à 5 pour la fabrication d'une feuille de toit comprenant au moins un insert renforçant.
